# DEMANDE DE BREVET EUROPEEN

(11) **EP 2 620 070 A1**
(43) Date de publication de la demande: **31.07.2013**
(21) Numéro de dépôt: 13000322.1
(22) Date de dépôt: 23.01.2013
(51) Int. Cl.: A43C 7/08, F16G 11/10

(54) **Elément chaussant muni d'un dispositif de serrage amélioré**

(30) Priorité: 25.01.2012 FR 1200207
(71) Demandeur: SALOMON S.A.S., 74370 Metz-Tessy (FR)
(72) Inventeur: Bressan, Luca, 31049 Valdobbiadene (Treviso) (IT)

(57) **Abrégé**

Dispositif de blocage (73) agissant pour au moins un brin (74, 75) de lacet (72), le dispositif (73) comprenant un corps (80) qui s'étend longitudinalement entre une première extrémité (81) et une deuxième extrémité (82), transversalement entre un premier bord (83) et un deuxième bord (84), et en hauteur entre une face de liaison (85) et une face libre (86), le corps (80) définissant pour chaque brin (74,75) un passage (91, 92) qui s'étend longitudinalement depuis une première ouverture d'extrémité (95, 96) jusqu'à une deuxième ouverture d'extrémité (97, 98), le dispositif (73) comprenant un moyen de blocage (93, 94) qui agit au niveau du passage (91, 92) pour le blocage ou le déblocage de chaque brin, le passage (91, 92) présentant une ouverture longitudinale (101, 102) qui débouche sur un bord (43) ou sur la face libre (86) du corps (80) de façon à permettre l'introduction du brin (74, 75) de lacet (72) dans le passage (91, 92), ou son dégagement, en partie ou en totalité, dans une direction autre que celle de serrage.

L'ouverture longitudinale (101, 102) présente une subdivision étroite (103, 104), dont la largeur est inférieure à celle du lacet (72).

## Description

L'invention concerne un dispositif mécanique de blocage de brins souples tels que des câbles, des cordes, des fils, des lacets, ou tout autre produit présenté sous un aspect similaire.

L'invention a trait plus particulièrement au blocage des lacets d'éléments chaussants tels que des chaussures en vue du serrage de celles-ci. Ainsi l'invention se rapporte aussi à un élément chaussant équipé avec un dispositif de blocage, ou à un système de serrage à lacet équipé avec un dispositif de blocage.

L'invention concerne plus particulièrement encore le domaine du sport, et notamment les chaussures de surf sur neige ou snowboard, de ski de piste, de ski de fond, de patin à roues ou à lame, de vélo, de randonnée, de marche, ou autre, ainsi que des systèmes de serrage de fixation, des articles tels que des sacs à dos comportant de tels brins, en vue du serrage et/ou de la compression de ces produits ou de parties de ceux-ci.

Il est connu de bloquer des brins souples à l'aide d'un dispositif.

Par exemple le document FR 2 896 384 divulgue un dispositif de blocage utilisé pour le serrage d'une chaussure, le dispositif agissant pour au moins un brin de lacet. Le dispositif selon ce document comprend un corps qui s'étend longitudinalement entre une première extrémité et une deuxième extrémité, transversalement entre un premier bord et un deuxième bord, et en hauteur entre une face de liaison et une face libre. Le corps définit pour chaque brin un passage qui s'étend longitudinalement depuis une première ouverture d'extrémité jusqu'à une deuxième ouverture d'extrémité, le dispositif comprenant un moyen de blocage qui agit au niveau du passage pour le blocage ou le déblocage de chaque brin. Le passage présente une ouverture longitudinale qui débouche sur la face libre du corps, de façon à permettre en partie l'introduction du brin de lacet dans le passage, ou son dégagement, dans une direction autre que celle de serrage.

Le dispositif de blocage selon le document FR 2 896 384 permet un serrage ou un desserrage rapide, par rapport à un dispositif selon l'art antérieur, de l'objet auquel il est associé, à savoir ici la chaussure. De plus le dispositif selon ce document permet de serrer ou de desserrer l'objet par des opérations simples. Le dispositif a donc constitué un progrès au regard de l'art antérieur.

Cependant il est apparu malgré tout que, dans certains cas, ce dispositif ne donne pas entière satisfaction. En effet, il arrive parfois que le brin bloqué dans le passage soit entrainé dans une situation de déblocage de manière intempestive, c'est-à-dire non désirée par un utilisateur de la chaussure. En fait le lacet est correctement retenu dans le passage, après serrage, si sa partie libre, celle qui a servi à exercer une traction pour serrer la chaussure, n'est pas sollicitée dans un sens de dégagement. Mais en pratique il arrive que cette partie libre soit mal rangée. De ce fait elle peut se dégager sous l'effet de son poids, d'oscillations qui surviennent pendant l'utilisation, ou parce qu'elle interfère avec un obstacle. La conséquence est que la chaussure se desserre et, de ce fait, le pied n'est plus suffisamment maintenu. Cela peut être gênant, par exemple lors de la conduite d'un engin tel qu'une planche de glisse.

Par rapport à cela, l'invention a pour but général d'améliorer un dispositif de blocage agissant pour au moins un brin de lacet. Par corollaire, l'invention cherche à améliorer le serrage d'un objet, en particulier d'un élément chaussant.

L'invention a notamment pour but de prévenir le dégagement de chaque brin de lacet, en dehors du passage du dispositif de blocage, contre la volonté de l'utilisateur. En d'autres termes le lacet doit être retenu dans le dispositif de blocage de manière stable. L'invention cherche aussi à simplifier les opérations de serrage ou de desserrage de l'objet. Par corollaire il s'agit de simplifier l'utilisation du dispositif de blocage.

Pour ce faire, l'invention propose un dispositif de blocage agissant pour au moins un brin de lacet, le dispositif comprenant un corps qui s'étend longitudinalement entre une première extrémité et une deuxième extrémité, transversalement entre un premier bord et un deuxième bord, et en hauteur entre une face de liaison et une face libre, le corps définissant pour chaque brin un passage qui s'étend longitudinalement depuis une première ouverture d'extrémité jusqu'à une deuxième ouverture d'extrémité, le dispositif comprenant un moyen de blocage qui agit au niveau du passage pour le blocage ou le déblocage de chaque brin, le passage présentant une ouverture longitudinale qui débouche sur un bord ou sur la face libre du corps de façon à permettre l'introduction du brin de lacet dans le passage, ou son dégagement, en partie ou en totalité, dans une direction autre que celle de serrage.

Le dispositif de blocage selon l'invention est caractérisé par le fait que l'ouverture longitudinale présente une subdivision étroite, dont la largeur est inférieure à celle du lacet. On verra mieux par la suite que la largeur de la subdivision étroite est généralement comprise entre 20 et 90% de la largeur du passage.

Etant donné que le lacet présente une section égale ou légèrement inférieure à la section du passage, la subdivision étroite présente une largeur inférieure au diamètre du lacet si celui-ci est rond. La subdivision étroite présente une largeur inférieure à l'épaisseur du lacet si celui-ci est plat. Dans tous les cas la largeur de la subdivision étroite est plus petite que la plus petite dimension d'une section du lacet. C'est pourquoi la subdivision étroite de l'ouverture longitudinale s'oppose à l'introduction du brin de lacet dans le passage, dans une direction autre que celle de serrage. Dans le même esprit la subdivision étroite de l'ouverture de serrage s'oppose au dégagement du brin de lacet en dehors du passage, dans une direction autre que celle de serrage. En conséquence l'utilisateur doit exercer un effort pour introduire ou libérer le brin. Cet effort provoque une déformation réversible du brin, dans le sens où celui-ci est légèrement écrasé quand il traverse la subdivision. On peut dire ainsi que la subdivision étroite délimite un niveau minimal de force à exercer sur le lacet pour obtenir l'introduction ou le dégagement de celui-ci dans ou en dehors du passage. La subdivision étroite joue le rôle d'un filtre qui empêche les sollicitations parasites, de faible intensité, d'engendrer un déblocage intempestif du brin de lacet.

Parmi les avantages qui en découlent, on peut noter une meilleure maitrise du serrage de la chaussure par l'utilisateur. En effet, le serrage ou le desserrage dépendent de la seule volonté de celui-ci. On remarque également que les opérations de serrage ou de desserrage sont simplifiées. Cela provient du fait que le passage forcé d'un brin de lacet dans la subdivision étroite, que ce soit dans le sens d'introduction ou dans le sens de dégagement, est très perceptible. Cette action est donc un indicateur d'état pour l'utilisateur, qui sait de façon certaine si le brin de lacet a bien été introduit dans le dispositif de blocage ou, au contraire, s'il en a été extrait.

Au final, l'invention améliore un dispositif de blocage agissant pour au moins un brin de lacet ce qui, en conséquence, améliore le serrage d'un objet.

D'autres caractéristiques et avantages de l'invention seront mieux compris à l'aide de la description qui va suivre, en regard du dessin annexé illustrant, selon deux formes de réalisation non limitatives, comment l'invention peut être réalisée, et dans lequel :
- la figure 1 est une vue en perspective avant d'un élément chaussant muni de deux dispositifs de blocage, selon les deux formes de réalisation décrites de l'invention,
- la figure 2 est une vue côté face libre d'un dispositif de blocage qui agit pour une subdivision de la tige de l'élément chaussant, selon la première des deux formes de réalisation, dans un cas où chaque brin de lacet est dégagé en dehors du passage du dispositif de blocage,
- la figure 3 est une vue d'une extrémité du dispositif de blocage de la figure 2,
- la figure 4 est une vue similaire à la figure 2, dans un cas où chaque brin est engagé dans le passage du dispositif de blocage,
- la figure 5 est une vue côté face libre d'un dispositif de blocage qui agit pour une subdivision de la tige de l'élément chaussant, selon la deuxième des deux formes de réalisation, dans un cas où chaque brin de lacet est dégagé en dehors du passage du dispositif de blocage,
- la figure 6 est similaire à la figure 5, dans un cas où chaque brin est engagé dans le passage du dispositif de blocage.

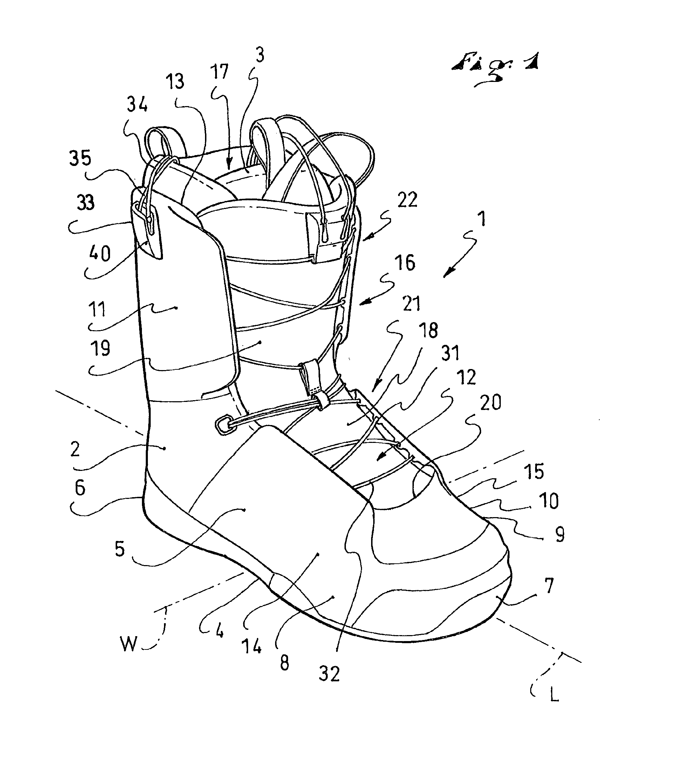

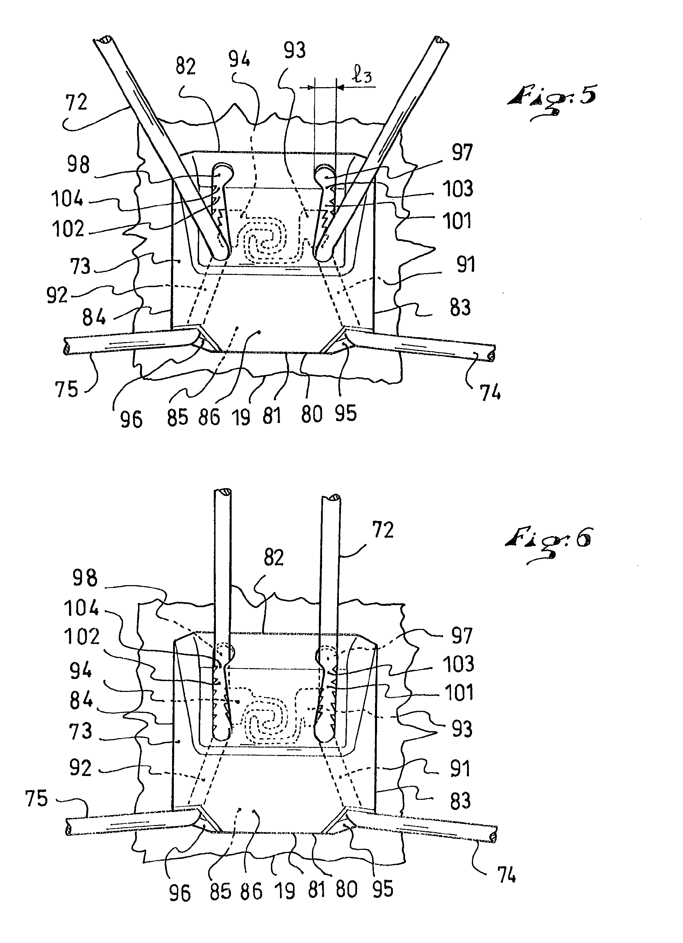

Les formes de réalisation, décrites après à l'aide des figures 1 à 6, concernent par exemple des chaussures de snowboard. Cependant l'invention s'applique à d'autres domaines tels que ceux évoqués avant.

Comme le montre la figure 1, une chaussure 1 est prévue pour accueillir le pied d'un utilisateur. De manière connue, et non limitative, la chaussure 1 comprend une enveloppe externe 2 et une enveloppe interne ou chausson 3. L'emploi de ce dernier n'est pas obligatoire mais apporte des propriétés parfois recherchées, comme le confort. L'enveloppe externe 2, appelée élément chaussant, comprend un semelage externe 4 et une tige 5 solidarisée au semelage. L'élément chaussant 2 s'étend en longueur, selon une direction longitudinale L, entre une extrémité arrière ou talon 6 et une extrémité avant ou pointe 7, et en largeur, selon une direction transversale W, entre un côté latéral 8 et un côté médial 9.

Telle que représentée la tige 5 comprend une portion basse 10, prévue pour couvrir le pied, ainsi qu'une portion haute 11, prévue pour entourer la cheville et éventuellement le bas de jambe. Cependant, l'invention s'applique aussi à un élément chaussant comprenant seulement une portion basse, ou à l'enveloppe interne 3.

Selon les formes de réalisation décrites, la tige 5 présente un dessus 12 au niveau de la portion basse 10, et une extrémité supérieure 13 ou extrémité libre au niveau de la portion haute 11. Ainsi l'élément chaussant 2 s'étend en hauteur depuis le semelage externe 4 jusqu'au dessus 12 du côté de la pointe 7, et depuis le semelage externe 4 jusqu'à l'extrémité supérieure 13 du côté du talon 6.

L'élément chaussant 2 est structuré pour permettre des inclinaisons du bas de jambe pendant la conduite d'une planche, un bon déroulement du pied pendant la marche, des transmissions d'informations sensorielles, et des transmissions d'impulsions pour des appuis ou des réceptions. C'est pourquoi le semelage externe 4 et la tige 5 sont relativement souples.

De manière non limitative, la tige 5 comprend un quartier latéral 14, relié au semelage externe 4 au niveau du côté latéral 8, ainsi qu'un quartier médial 15, relié quant à lui au semelage externe 4 au niveau du côté médial 9. L'élément chaussant 2 présente une ouverture de chaussage 16, laquelle s'étend depuis l'extrémité supérieure 13 vers l'extrémité avant 7. Du côté de l'extrémité supérieure, l'ouverture 16 présente une subdivision arrière 17, destinée à laisser passer le pied, et aussi à entourer le bas de jambe après chaussage. Depuis la subdivision arrière 17 et vers l'avant, l'ouverture de chaussage 16 présente une subdivision avant 18 qui autorise une variation de dimension de l'ouverture et du volume de chaussage. Bien entendu, les subdivisions arrière 17 et avant 18 se prolongent l'une l'autre. On observe en complément que l'élément chaussant 2 comprend une languette 19 qui s'étend le long de la subdivision avant 18 de l'ouverture 16, entre le quartier latéral 14 et le quartier médial 15. La languette 19 est solidarisée au reste de la tige 5 à proximité de la pointe 7, c'est-à-dire à la limite avant 20 de l'ouverture 16. Cette limite 20 est située en retrait de la pointe 7, à une distance comprise entre 10 et 35% de la longueur de l'élément chaussant 2.

Afin d'être serré de manière réversible, l'élément chaussant 2 comprend un premier dispositif de serrage réversible 21 des quartiers latéral 14 et médial 15, ainsi qu'un deuxième dispositif de serrage réversible 22 de ces mêmes quartiers 14, 15. Parce qu'ils correspondent respectivement aux deux formes de réalisation de l'invention, les dispositifs de serrage 21, 22 sont décrits ci-après séparément.

De manière non limitative pour la première forme, comme on peut le considérer sur les figures 1 à 4, le premier dispositif de serrage 21 est agencé pour serrer une subdivision basse de l'élément chaussant 2, à savoir la portion basse 10. Pour ce faire le dispositif de serrage 21 comprend des passants bas 31 disposés sur les quartiers 14, 15 dans la portion basse 10, un lacet 32, et un premier dispositif de blocage rapide 33 qui sera présenté en détail après. Le lacet 32 chemine par les passants, entre les quartiers 14, 15, en formant une boucle au niveau de la limite avant 20, et en donnant deux brins 34, 35 qui coopèrent avec le dispositif 33 pour un blocage rapide, comme il va être détaillé après. Le dispositif de blocage 33 est par exemple situé en haut de la tige 5, à proximité de l'extrémité supérieure 13, du côté latéral 8. Le lacet 32 chemine entre la portion basse 10 et le premier dispositif de blocage 33 entre les enveloppes interne 3 et externe 2.

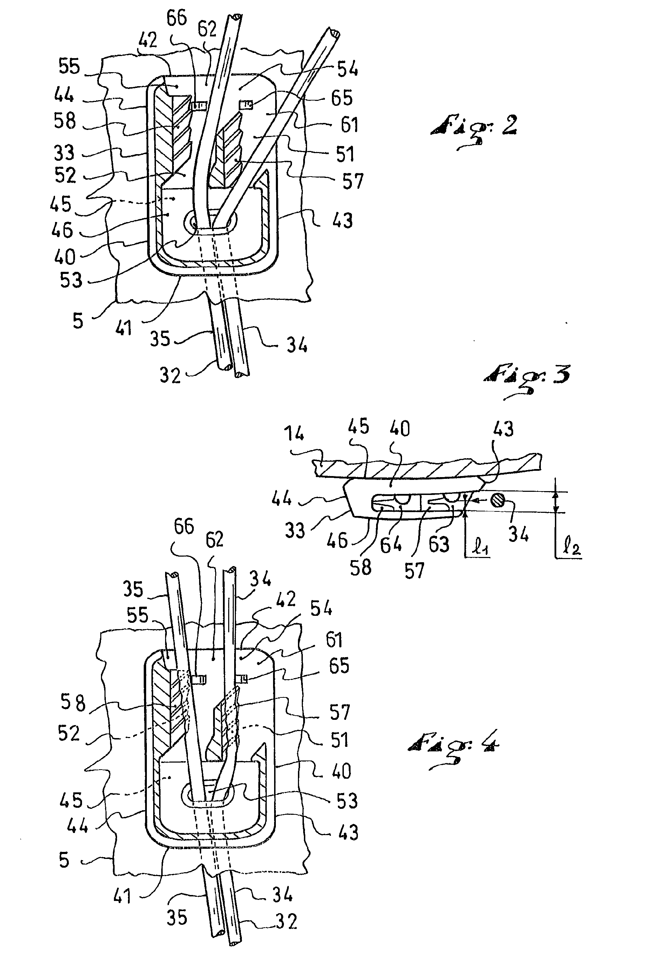

Comme on peut le considérer sur l'ensemble des figures 2 à 4, le dispositif de blocage 33 comprend un corps 40 qui s'étend longitudinalement entre une première extrémité 41 et une deuxième extrémité 42, transversalement entre un premier bord 43 et un deuxième bord 44, et en hauteur, ou en épaisseur, entre une face de liaison 45 et une face libre 46. On peut observer que la face de liaison 45 est solidarisée à la tige 5 de l'élément chaussant 2, par exemple au quartier latéral 14. On verra par la suite que chaque brin 34, 35 du lacet 32 peut se déplacer dans le dispositif de blocage 33 dans une direction qui va de la première extrémité 41 à la deuxième 42. La partie du lacet 32 comprise entre le dispositif de blocage 33 et la limite avant 20 peut serrer la portion basse 10 de la tige 5 de manière réversible.

Dans cette optique le corps 40 définit un passage 51, 52 pour chaque brin 34, 35 de lacet 32, le passage s'étendant longitudinalement depuis une première ouverture d'extrémité 53 jusqu'à une deuxième ouverture d'extrémité 54, 55.

En fait, selon la première forme de réalisation décrite, et de manière non limitative, le corps 40 du dispositif de blocage 33 définit un premier passage 51 qui s'étend longitudinalement depuis une première ouverture d'extrémité 53 jusqu'à une deuxième ouverture d'extrémité 54, ainsi qu'un deuxième passage 52 qui s'étend longitudinalement depuis une première ouverture d'extrémité 53 jusqu'à une deuxième ouverture d'extrémité 55. Chacune des premières ouvertures d'extrémité 53 d'un passage 51, 52 est située au niveau de la première extrémité 41 du corps 40. Ici les premières ouvertures d'extrémité 53 sont réunies pour en délimiter une seule, qui guide deux brins de lacet 34, 35. Ensuite, chacune des deuxièmes ouvertures d'extrémité 54, 55 d'un passage 51, 52 est située au niveau de la deuxième extrémité 42 du corps 40. Chaque passage 51, 52 accueille un brin 34, 35 du lacet 32. En conséquence le premier dispositif de blocage 33 comprend un premier moyen de blocage 57, pour le premier passage 51, ainsi qu'un deuxième moyen de blocage 58, pour le deuxième passage 52, qui agissent au niveau de chaque passage pour le blocage ou le déblocage de chaque brin, comme on le verra mieux par la suite.

Le premier passage 51 présente une ouverture longitudinale 61 qui s'étend depuis la deuxième ouverture d'extrémité 54 vers la première ouverture d'extrémité 53. De même le deuxième passage 52 présente une ouverture longitudinale 62 qui s'étend depuis la deuxième ouverture d'extrémité 55 vers la première ouverture d'extrémité 53. Dans chaque cas, l'ouverture longitudinale permet selon les besoins de faire coopérer un brin de lacet avec le dispositif de blocage 33 ou, au contraire, d'interrompre la coopération.

Selon l'invention, pour chaque passage 51, 52, l'ouverture longitudinale 61, 62 présente une subdivision étroite 63, 64, dont la largeur ℓ1 est inférieure à celle du lacet. On prévoit notamment une largeur de la subdivision étroite comprise entre 20 et 90% de la largeur ℓ2 du passage 51, 52. La subdivision étroite est une réduction de la largeur du passage, qui s'oppose à l'introduction du brin de lacet dans le passage, ou à son dégagement en dehors du passage, dans une direction transversale du dispositif. Cette direction est parallèle à la face de liaison 45, et s'étend du deuxième bord 44 au premier bord 43. Cela fait que l'introduction ou le dégagement d'un brin 34, 35 est obtenu par un mouvement de celui-ci parallèlement à la face de liaison 45. Etant donné que cette dernière est disposée sur la tige 5, le mouvement d'un brin est tangent à la tige 5.

Toujours à propos de la première forme de réalisation décrite, chaque ouverture longitudinale 61, 62 débouche transversalement. Cela signifie ici qu'elle s'ouvre vers le premier bord 43. Compte tenu de l'implantation du dispositif 33 sur la tige 5, chaque brin de lacet peut être dégagé par un mouvement vers la pointe 7, comme c'est le cas sur la figure 2.

De manière plus précise on peut noter que chaque ouverture longitudinale 61, 62 débouche sur un bord 43 du corps 40, c'est-à-dire d'un même côté. Cela permet d'actionner les deux brins 34, 35 de lacet simultanément.

A titre d'exemple le dispositif de blocage 33 comprend un ergot 65, 66 qui délimite la subdivision étroite 63, 64 de l'ouverture longitudinale 61, 62. Chaque ergot 65, 66 fait saillie dans un passage 51, 52, où il délimite la subdivision étroite 63, 64 avec précision.

En complément on peut observer que le moyen de blocage 57, 58 qui agit au niveau du passage 51, 52 comprend des dents 67, 68. Il suffit d'appliquer un brin de lacet sur les dents pour obtenir sa retenue dans le dispositif, c'est-à-dire pour empêcher son glissement dans un sens qui va de la deuxième extrémité 42 vers la première extrémité 41. Dans ce cas le serrage de la portion basse 10 est maintenu.

De manière non limitative pour la deuxième forme de réalisation maintenant, comme on peut le considérer sur les figures 1, 5 et 6, le deuxième dispositif de serrage 22 est agencé pour serrer une subdivision haute de l'élément chaussant 2, à savoir la portion haute 11. Pour ce faire le dispositif de serrage 22 comprend des passants hauts 71 disposés sur les quartiers 14, 15 dans la portion haute 11, un lacet 72, et un deuxième dispositif de blocage rapide 73 qui sera présenté en détail après. Le lacet 72 chemine par les passants 71, entre les quartiers 14, 15, en formant une boucle au niveau de l'intersection des portions basse 10 et haute 11, et en donnant deux brins 74, 75 qui coopèrent avec le dispositif 73 pour un blocage rapide, comme il sera vu après. Le dispositif de blocage 73 est par exemple situé en haut de la tige 5, ici sur la languette 19, à proximité de l'extrémité supérieure 13.

Comme on peut le considérer sur l'ensemble des figures 1, 5 et 6, le dispositif de blocage 73 comprend un corps 80 qui s'étend longitudinalement entre une première extrémité 81 et une deuxième extrémité 82, transversalement entre un premier bord 83 et un deuxième bord 84, et en hauteur, ou en épaisseur, entre une face de liaison 85 et une face libre 86. On peut observer que la face de liaison 85 est solidarisée à la tige 5 de l'élément chaussant 2, en fait à la languette 19, à proximité de l'extrémité supérieure 13. On verra plus loin que chaque brin 74, 75 du lacet 72 peut se déplacer dans le dispositif de blocage 73 dans une direction qui va de la première extrémité 81 à la deuxième 82. La partie du lacet 72 comprise entre le dispositif de blocage 73 et la limite entre les portions basse 10 et haute 11 peut serrer cette dernière de manière réversible.

Dans cette optique le corps 80 définit un passage 91, 92 pour chaque brin 74, 75 de lacet 76, le dispositif de blocage 73 comprenant un moyen de blocage 93, 94 qui coopère avec le passage 91, 92 pour le blocage ou le déblocage de chaque brin 74, 75 de lacet 72, le passage 91, 92 s'étendant longitudinalement depuis une première ouverture d'extrémité 95, 96 jusqu'à une deuxième ouverture d'extrémité 97, 98.

En fait, selon la deuxième forme de réalisation décrite, et de manière non limitative, le corps 80 du dispositif de blocage 73 définit un premier passage 91, ici passage médial, qui s'étend longitudinalement depuis une première ouverture d'extrémité 95 jusqu'à une deuxième ouverture d'extrémité 97, ainsi qu'un deuxième passage 92, ici passage latéral, qui s'étend longitudinalement depuis une première ouverture d'extrémité 96 jusqu'à une deuxième ouverture d'extrémité 98. Chacune des premières ouvertures d'extrémité 95, 96 d'un passage 91, 92 est située au niveau de la première extrémité 81 du corps 80, et chacune des deuxièmes ouvertures d'extrémité 97, 98 d'un passage 91, 92 est située au niveau de la deuxième extrémité 82 du corps 80. Chaque passage accueille un brin 74, 75 de lacet 72. En conséquence le dispositif de blocage 73 comprend un premier moyen de blocage 93, pour le premier passage 91, ainsi qu'un deuxième moyen de blocage 94, pour le deuxième passage 92. On verra plus loin quels sont les structures et le mode de fonctionnement de ces moyens.

Le premier passage 91 présente une première ouverture longitudinale 101 qui s'étend entre la première ouverture d'extrémité 95 et la deuxième ouverture d'extrémité 97. De même le deuxième passage 92 présente une deuxième ouverture longitudinale 102 qui s'étend entre la première ouverture d'extrémité 96 et la deuxième ouverture d'extrémité 98. Dans chaque cas, l'ouverture longitudinale permet selon les besoins de faire coopérer un brin de lacet avec le dispositif de blocage 73 ou, au contraire, d'interrompre la coopération.

Selon l'invention, chaque ouverture longitudinale 101, 102 débouche sur la face libre 86 du corps 80 du dispositif 73. Cela permet de manipuler le lacet 72 par des gestes simples et rapides.

La subdivision étroite 103, 104 d'une ouverture longitudinale 101, 102 est définie par une réduction de la largeur ℓ3 de l'ouverture longitudinale 101, 102. Cela confère au dispositif 73 une structure simple.

De manière non limitative, pour chaque passage 91, 92, le moyen de blocage 93, 94 comprend une came. Cela permet d'empêcher un déblocage de chaque brin 74, 75 par effet de coincement.

Pour toutes les formes de réalisation de l'invention, l'ouverture longitudinale 61, 62, 101, 102 s'étend sur une partie seulement de la longueur du corps 40, 80. Ainsi le lacet reste solidaire du dispositif de blocage même si la chaussure est desserrée, ce qui rend les manipulations ultérieures de serrage plus faciles. En effet, le lacet est alors déjà engagé dans le dispositif de blocage.

La subdivision étroite 63, 64, 103, 104 s'étend sur une longueur comprise entre let 20% de la longueur de l'ouverture longitudinale 61, 62, 101, 102. Cette plage de dimensions offre un bon compromis entre la résistance au déblocage intempestif et l'usure du lacet.

La subdivision étroite 63, 64, 103, 104 est à l'écart, c'est-à-dire en retrait, des extrémités de l'ouverture longitudinale 61, 62, 101, 102. Ainsi le brin de lacet est guidé par l'ouverture pour coopérer avec la subdivision, que ce soit pour l'introduire ou pour le dégager. Les manipulations n'en sont que plus faciles.

Dans tous les cas l'invention est réalisée à partir de matériaux et selon des techniques de mise en oeuvre connus de l'homme du métier.

Bien entendu l'invention n'est pas limitée aux formes de réalisation ci-avant décrites, et comprend tous les équivalents techniques pouvant entrer dans la portée des revendications qui vont suivre.

Par exemple, on peut prévoir qu'un dispositif de blocage agisse pour un seul brin de lacet, ou bien qu'un passage d'un dispositif opère pour plusieurs brins.

## Revendications

1. Dispositif de blocage (33, 73) agissant pour au moins un brin (34, 35, 74, 75) de lacet (32, 72), le dispositif (33, 73) comprenant un corps (40, 80) qui s'étend longitudinalement entre une première extrémité (41, 81) et une deuxième extrémité (42, 82), transversalement entre un premier bord (43, 83) et un deuxième bord (44, 84), et en hauteur entre une face de liaison (45, 85) et une face libre (46, 86), le corps (40, 80) définissant pour chaque brin (34, 35, 74, 75) un passage (51, 52, 91, 92) qui s'étend longitudinalement depuis une première ouverture (53, 95, 96) d'extrémité jusqu'à une deuxième ouverture d'extrémité (54, 55, 97, 98), le dispositif (33, 73) comprenant un moyen de blocage (57, 58, 93, 94) qui agit au niveau du passage (51, 52, 91, 92) pour le blocage ou le déblocage de chaque brin, le passage (51, 52, 91, 92) présentant une ouverture longitudinale (61, 62, 101, 102) qui débouche sur un bord (43) ou sur la face libre (86) du corps (40, 80) de façon à permettre l'introduction du brin (34, 35, 74, 75) de lacet (32, 72) dans le passage (51, 52, 91, 92), ou son dégagement, en partie ou en totalité, dans une direction autre que celle de serrage,
**caractérisé par le fait que** l'ouverture longitudinale (61, 62, 101, 102) présente une subdivision étroite (63, 64, 103, 104), dont la largeur est inférieure à celle du lacet (32, 72).

2. Dispositif de blocage (33, 73) selon la revendication 1, **caractérisé par le fait que** la largeur de la subdivision étroite est comprise entre 20 et 90% de la largeur du passage.

3. Dispositif de blocage (33, 73) selon la revendication 1 ou 2, **caractérisé par le fait que** le corps (40, 80) définit un premier passage (51, 91) qui s'étend longitudinalement depuis une première ouverture d'extrémité (53, 95) jusqu'à une deuxième ouverture d'extrémité (54, 97), ainsi qu'un deuxième passage (52, 92) qui s'étend longitudinalement depuis une première ouverture d'extrémité (53, 96) jusqu'à une deuxième ouverture d'extrémité (55, 98).

4. Dispositif de blocage (33, 73) selon l'une des revendications 1 à 3, **caractérisé par le fait que** l'ouverture longitudinale (61, 62, 101, 102) s'étend sur une partie seulement de la longueur du corps (40, 80).

5. Dispositif de blocage (33, 73) selon l'une des revendications 1 à 4, **caractérisé par le fait que** l'ouverture longitudinale (61, 62) s'étend depuis la deuxième ouverture d'extrémité (54, 55) vers la première ouverture d'extrémité (53).

6. Dispositif de blocage (33, 73) selon l'une des revendications 1 à 5, **caractérisé par le fait que** la subdivision étroite (63, 64, 103, 104) s'étend sur une longueur comprise entre 1 et 20% de la longueur de l'ouverture longitudinale (61, 62, 101, 102).

7. Dispositif de blocage (33, 73) selon l'une des revendications 1 à 6, **caractérisé par le fait que** la subdivision étroite (63, 64, 103, 104) est à l'écart des extrémités de l'ouverture longitudinale (61, 62, 101, 102).

8. Dispositif de blocage (33) selon l'une des revendications 1 à 7, **caractérisé par le fait que** chaque ouverture longitudinale (61, 62) débouche transversalement.

9. Dispositif de blocage (33) selon l'une des revendications 1 à 8, **caractérisé par le fait que** chaque ouverture longitudinale (61, 62) débouche sur un bord (43) du corps (40).

10. Dispositif de blocage (33) selon l'une des revendications 1 à 9, **caractérisé par le fait qu'**un ergot (65, 66) délimite la subdivision étroite (63, 64) de l'ouverture longitudinale (61, 62).

11. Dispositif de blocage (33) selon l'une des revendications 1 à 10, **caractérisé par le fait que** le moyen de blocage (57, 58) qui agit au niveau du passage (51, 52) comprend des dents (67, 68).

12. Dispositif de blocage (73) selon l'une des revendications 1 à 7, **caractérisé par le fait que** chaque ouverture longitudinale (101, 102) débouche sur la face libre (86) du corps (80).

13. Dispositif de blocage (73) selon l'une des revendications 1 à 7 et 12, **caractérisé par le fait que** la subdivision étroite (103, 104) est définie par une réduction de la largeur (ℓ3) de l'ouverture longitudinale (101, 102).

14. Dispositif de blocage (73) selon l'une des revendications 1 à 7, 12 ou 13, **caractérisé par le fait que** le moyen de blocage (93, 94) comprend une came.

15. Elément chaussant (2) comprenant un semelage externe (4) et une tige (5) solidarisée au semelage, l'élément chaussant (2) comprenant un dispositif de serrage réversible (21, 22) qui comprend un lacet (32, 72), des passants (31, 71), ainsi qu'un dispositif de blocage (33, 73) selon l'une quelconque des revendications 1 à 14.
